**Europäisches Patentamt**

**European Patent Office**

**Office européen des brevets**

(11) Veröffentlichungsnummer: **0 173 675**
A1

(12) **EUROPÄISCHE PATENTANMELDUNG**

(21) Anmeldenummer: 85890181.2

(22) Anmeldetag: 14.08.85

(51) Int. Cl.⁴: **B 23 P 15/32**, B 21 K 5/04

(30) Priorität: 28.08.84 AT 2747/84

(43) Veröffentlichungstag der Anmeldung: 05.03.86
Patentblatt 86/10

(84) Benannte Vertragsstaaten: BE CH DE FR GB IT LI NL SE

(71) Anmelder: **VEREINIGTE EDELSTAHLWERKE AKTIENGESELLSCHAFT (VEW), Elisabethstrasse 12, A-1010 Wien (AT)**

(72) Erfinder: **Findenigg, Hugo, Steinerhofallee 5, A-8605 Kapfenberg (AT)**
Erfinder: **Gstettner, Manfred, A. Böhler-Gasse 10b, A-8605 Kapfenberg (AT)**
Erfinder: **Hribernik, Bruno, Dipl.-Ing., Gloriettsiedlung 11, A-8600 Bruck/Mur (AT)**

(74) Vertreter: **Jellinek, Gerhard, Dr., Vereinigte Edelstahlwerke AG (VEW) Elisabethstrasse 12, A-1010 Wien (AT)**

(54) Verfahren und Vorrichtung zur Herstellung von, insbesondere metallischen, Werkstücken, vorzugsweise aus Stahl.

(57) Die Erfindung betrifft eine Verfahren und eine Vorrichtung zur Herstellung von, insbesondere metallischen, Werkstücken, vorzugsweise aus Stahl, mit ausgeprägter Längserstreckung, insbesondere für Bohrer od. dgl., mit mindestens einer, gegebenenfalls im wesentlichen um eine in Längserstreckungsrichtung verlaufende Achse wendelartig angeordneten Ausnehmung, insbesondere mit geschlossenen Querschnitt aufweisendem Kanal, durch Verdrallen eines mindestens eine, zu der genannten Achse vorzugsweise im wesentlichen parallel, verlaufende Ausnehmung aufweisenden, in plastischen Zustand gebrachten Vorwerkstückes, wobei unter Aufbringung und Aufrechterhaltung von um die Werkstückhaupt- und/oder eine Verdrallachse wirksamen Torsionskräften durch ein mindestens eine Ausnehmung in seinem Inneren aufweisendes Vorwerkstück entlang von zumindest Teilen seiner Längserstreckung Zumindest eine, geringere Länge als die Länge des Vorwerkstückes aufweisende, im wesentlichen den gesamten Querschnitt des Vorwerkstückes erfassende Plastifizierzone, vorzugsweise Erhitzungszone, geführt wird.

- 1 -

Verfahren und Vorrichtung zur Herstellung
von, insbesondere metallischen, Werkstücken,
vorzugsweise aus Stahl

Die Erfindung betrifft ein neues Verfahren zur Herstellung von, insbesondere metallischen, Werkstücken, vorzugsweise aus Stahl, mit ausgeprägter Längserstreckung, insbesondere für Bohrer od. dgl., mit mindestens einer, gegebenenfalls im wesentlichen um eine in Längserstreckungsrichtung verlaufende Achse wendelartig angeordneten Ausnehmung, insbesondere mit geschlossenen Querschnitt aufweisendem Kanal, durch Verdrallen eines mindestens eine, zu der genannten Achse vorzugsweise im wesentlichen parallel, verlaufende Ausnehmung aufweisenden, in plastischen Zustand gebrachten Vor-Werkstückes sowie eine Vorrichtung zur Durchführung des Verfahrens.

Es ist bekannt, längliche Werkstücke z.B. Stabmaterial aus Stahl, z.B. für besonders leistungsfähige Bohrer, im Inneren mit Kanälen, z.B. für die Zufuhr von flüssigem Medium zur Bohrerspitze, zu versehen , wobei es wichtig ist, daß der Verlauf der Kanäle mit jenem der Nuten bzw. der Bohrerwendel so weitgehend übereinstimmt, daß Materialschwächungen infolge von deren nicht konformen Verlauf größtmöglich vermieden sind.

So sind auf dem Gebiet der wendelartige Kanäle aufweisenden Bohrer verschiedene Bauarten bekanntgeworden, welche, so wie ihre Entwicklung in einem Übersichtsartikel in Technica 1974, Nr. 16, 1327-1332 zusammengefaßt sind. Prinzipiell kann die Herstellung von derartigen gewendelte Kanäle aufweisenden Bohrern erfolgen, indem in einen Stab, z.B. einen gewalzten Bohrerrohling im Abstand von der Haupt-Achse mindestens eine, vielfach jedoch zwei oder mehr Längsbohrungen eingearbeitet werden, wonach das Vorwerkstück, in plastischen
Zustand versetzt, der Einwirkung eines Dralles um die
Hauptachse ausgesetzt wird. Dabei läßt sich jedoch
hohe Gangverlaufs-Genauigkeit der Kanäle nicht erreichen.

Aufgabe der Erfindung war es nun, nicht auf metallische
Werkstoffe beschränkt, nicht nur mit wendelartig verlaufenden Kanälen mit geschlossenem Querschnitt versehene Werkstücke herzustellen, sondern ein für verschiedene Materialien anwendbares Verfahren zu entwickeln, das es ermöglicht, längliche Werkstücke, z.B.
für Bohrer, mit hohe Genauigkeit und Synchronität aufweisenden Ausnehmungen mit wendelartigem Verlauf zu fertigen, wobei an der Oberfläche nicht geschlossene Ausnehmungen sein können
und im Inneren mindestens ein geschlossener Kanal vorhanden ist. Es
sollten ein Verfahren und eine Vorrichtung entwickelt werden,
mit welchen nicht nur Wendelkanal-Bohrer zu fertigen sind, sondern z.B. auch wendelartige Kanäle und Nuten aufweisende Schnecken
für Extruder oder beispielsweise schraubenartige Teile aus,
z.B. thermoplastischen, Kunststoffen, gegebenenfalls mit
Metallversatz, mit Wendeln u.dgl.

Gegenstand der Erfindung ist ein wie eingangs genanntes Verfahren, das im wesentlichen darin besteht,
daß unter Aufbringung und Aufrechterhaltung von um
die Werkstückhaupt- und/oder eine Verdrallachse wirksamen Torsionskräften durch ein mindestens eine, vorzugsweise geradlineare, Ausnehmung in seinem Inneren
aufweisendes Vorwerkstück entlang von zumindest Teilen
seiner Längserstreckung zumindest eine, wesentlich geringere
Länge als die Länge des Vorwerkstückes aufweisende,
im wesentlichen den gesamten Querschnitt des Vorwerkstückes erfassende Plastifizierzone geführt wird. Dadurch daß diese Zone geringer Ausdehnung das Vorwerkstück durchwandert, während dabei gleichzeitig Verdrallkräfte aufgebracht werden, läßt sich an jeder Stelle des Werkstückes durch Abstimmung von Drall-Drehzahl und Wanderungsgeschwindigkeit der Plastifizierzone genaue Einstellung der Form der Wendel der Ausnehmung erreichen. Die jeweils nicht plastifizierten Teile eines Vorwerkstückes sind starr und übertragen praktisch schlupffrei die Verdrallmomente zum jeweils plastifizierten Bereich, sodaß die Verdrallkräfte, auch wenn sie an den Werkstückenden aufgebracht werden, doch dort zur Ausbildung der Wendelform wirken, wo das Vorwerkstück plastifiziert ist; damit ist Verdrallung an unerwünschten Stellen ausgeschlossen. Es wird eine sehr gleichmäßige Verdrallung des Werkstücks-Inneren erzielt, was für die bevorzugt herzustellenden Innenkanalwendel besonders vorteilhaft ist, überraschenderweise, ohne daß für die Kühlwirkung nachteilige ungleichmäßige Querschnittsveränderungen und Verlagerungen, die bei Außenwendeln nicht stören würden, auftreten.

Mit dem neuen Verfahren lassen sich unschwierig auch Werkstücke mit Ausnehmungen herstellen, deren Wendel in Durchmesser und Ganghöhe, gegebenenfalls wechselnd, genau auf spätere Aufgaben des Werkstückes ausgerichtet werden können. Wird z.B. in das Vorwerkstück zuerst eine geradlinige, zur Vorwerkstücks- oder Verdrall-Achse windschief angeordnete Bohrung eingebracht, so wird beim neuen zonalen Verdrallen ein innenliegender Kanal gebildet, dessen Wendel im wesentlichen die Form eines Kegelstumpfes oder zweier zusammenhängender Kegelstümpfe aufweist. Bei einer Bohrung, die die Achse etwa in Werkstückmitte im Winkel schneidet, läßt sich ein wendelförmiger Kanal mit beidseitig zur Werkstückmitte hin stetig abnehmendem Wendeldurchmesser erzielen, wobei in der Mitte der Wendeldurchmesser Null, also keine Wendel ist. Ein derartiges Werkstück kann in der Mitte in zwei Werkstücke getrennt werden, die an der Trennstelle eine koaxiale Öffnung, z.B. zum Einbringen von Medium aufweisen, das zur Bohrerspitze hin stetig nach außen gebracht wird. Auf diese Weise können auch mehrere Kanal-Wendel um die Achse angeordnet werden, wobei dennoch auf einer Seite nur eine zentrale Zufuhröffnung angeordnet ist. Im wesentlichen genügt eine modifizierte Drehbank od. dgl. Mit dem Verfahren lassen sich auch die wendelförmigen Bohrernuten, gegebenenfalls zusammen mit Wendelkanälen im Inneren fertigen, sodaß bei der Fertigung nur noch Nacharbeit od. dgl. nötig ist.

Um ein die Genauigkeit der Wendel herabsetzendes Nachdrallen nach Passieren der Plastifizierzone zu vermeiden, ist es günstig, wenn unmittelbar anschließend an diese durch das Werkstück eine Verfestigungszone, bevorzugt eine Kühlzone, geführt wird.

Um eine schmale Zone über den vollen Querschnitt möglichst gleichmäßig zu plastifizieren, also insbesondere auf eine gewünschte Temperatur genau einstellen zu können, ist es besonders vorteilhaft, die Plastifizierzone mit einem elektrischen Induktionsfeld zu bilden. Bei genauer Zufuhr von Brenngas zu um das Werkstück an-geordneten Brennern und exakter Flammenführung kann das Aufheizen auch mittels Flamme erfolgen.

Eine besonders wirkungsvolle Wiederverfestigung nach Plastifizierung und Verdrallung in der Wanderzone läßt sich, wie gefunden wurde, erreichen, wenn gemäß einer bevorzugten Ausbildungsform die vorher erwähnte Verfestigungszone mit, vorzugsweise von allen Seiten, auf das Vorwerkstück gerichtetem Kühlgasstrom, insbesondere Luftstrom, gebildet wird, wobei das Gas, um die Kühlwirkung zu erhöhen, mit Flüssigkeit, z.B. in Form eines Sprühnebels, versetzt sein kann.

Das meist kostspielige Ausgangsmaterial für das Werkstück läßt sich optimal nutzen, wenn in bevorzugter Weise das Vorwerkstück im wesentlichen im Nahbereich eines seiner Enden mit Torsionskräften beaufschlagt wird, während es im Bereich des anderen Endes gegen Verdrehung gesichert festgehalten wird. Darüber hinaus kann dadurch eine ungehinderte Bewegbarkeit der Plastifizierzone entlang des Werkstückes erreicht werden, sowie hohe Präzision bei der Aufbringung der Torsion.

Gemäß einer weiteren vorteilhaften Variante, bei der jeweils in der plastifizierten Zone höhere Verdrallsymmetrie erreicht werden kann, kann vorgesehen sein, daß das Vorwerkstück im wesentlichen in den Nahbereichen beider seiner Enden mit einander gegenläufigen Verdrallmomenten beaufschlagt wird.

Weniger aufwendig ist eine Verfahrensweise, bei der das Vorwerkstück ortsfest gehalten, den Torsionsmomenten ausgesetzt wird, während die Plastifizierzone bewegt wird.

Um jeweils besonders exakte Lage der Wendel der Ausnehmung an jedem Punkt des Werkstückes zu erreichen, ist es besonders bevorzugt, auf das Vorwerkstück aufgebrachte Torsionsgeschwindigkeit und Bewegungsgeschwindigkeit der Plastifizierzone in funktioneller, vorzugsweise konstanter, Abhängigkeit zueinander einzustellen. Ist dieses Verhältnis konstant, so werden über die gesamte Werkstücklänge gleichmäßige Ganghöhe aufweisende Wendel-Ausnehmungen erreicht. Gehorcht das Verhältnis bei Fortschreiten der Plastifizierzone durch das dem Drall ausgesetzte Werkstück einer anderen mathematischen Funktion, so läßt sich ganz gezielt und exakt eine gewünschte Veränderung der Ganghöhe gemäß dieser mathematischen Funktion erreichen.

Wenn es auch an sich theoretisch wünschenswert scheint, möglichst nur differentielle, scheibenförmige Elemente des Vorwerkstückes auf Plastifiziertemperatur zu bringen, so hat es sich in der Praxis als der Genauigkeit nicht abträglich erwiesen, wenn eine Plastifizierzone durch das Vorwerkstück geführt wird, deren Länge in Hauptachsrichtung etwa im Bereich von, vorzugsweise im wesentlichen höchstens gleich, besonders bevorzugt aber geringer als, dessen Dicke bzw. Durchmesser liegt bzw. ist.

Günstig ist es jedenfalls, beidseitig der Plastifizierzone einen möglichst jeweils steilen Temperaturgradienten zu erreichen, sodaß Vor- und Nach-Verwinden des Werkstückes überhaupt vermieden wird. Vor-Verwindung kann für besonders exakte Fertigung durch eine zusätzliche, unmittelbar vor der Plastifizierzone geführte eigene Starrhalte-, meist eine Kühlzone,erreicht werden.

Weiterer Gegenstand der Erfindung ist eine vorteilhafte Vorrichtung zur Durchführung des erfindungsgemäßen Verfahrens, welche im wesentlichen gekennzeichnet ist durch mindestens zwei auf konstanten Abstand voneinander einstellbar angeordnete Einrichtungen zum verdrehungssicheren Festhalten eines ausgeprägte Längserstreckung
aufweisenden Vorwerkstückes, deren zumindest eine als
Torsionskraftaufbringungseinrichtung um eine Verdrallachse, vorzugsweise Vorwerkstückhauptachse, drehbar antreibbar ist, und mindestens eine im wesentlichen zwischen
den Festhalteeinrichtungen angeordnete, vorzugsweise Induktivheizeinrichtung aufweisende, Plastifiziereinrichtung,
wobei die Festhalteeinrichtung mit dem Vorwerkstück einerseits und die Plastifiziereinrichtung andererseits im
wesentlichen in Längserstreckung des Vorwerkstückes zueinander im wesentlichen linear relativ-bewegbar ausgebildet sind. Eine solche Anlage ist bei ausreichendem
Abstand der Spanneinrichtungen hinsichtlich Werkstücklängen
sehr flexibel. Es sind dazu mit Ausnahme der Wärm- und Kühleinrichtung im wesentlichen nur Elemente üblicher Drehmaschinen notwendig.

Um die Plastifizierzone durch das Werkstück zu führen,
ohne daß es zu örtlichem Durchbiegen, Verziehen od. dgl.
kommt, ist es günstig, wenn die Plastifiziereinrichtung
gleichzeitig Lagehaltungs- bzw.Führungseinrichtungen für
das Vorwerkstück aufweist. Diese können im einfachsten
Fall das Werkstück, gegebenenfalls beidseitig, neben der Plastifizierzone in Position haltende Stützen, z.B. mit Führungsöffnungen od. dgl. sein.

Besonders günstig ist es und läßt, wie erwähnt, höchste
Genauigkeit sowohl bei meist gewünschter Konstanz oder
anderer funktioneller Abhängigkeit von Steighöhe und
Distanz der Wendel-Ausnehmung im Werkstück erzielen,
wenn der Antrieb für die Torsionskraftaufbringungseinrichtung und jener für die Relativ-Bewegbarkeit der Festhalte- bzw.
Verdralleinrichtung und Plastifiziereinrichtung zueinander, drehzahl- bzw. vorschubgeschwindigkeits-einstellbar, insbesondere numerisch, z.B. NC- oder CNC-gesteuert, miteinander gekoppelt sind.

Um die Plastifizierzone möglichst schmal zu halten, und ein Nachverdrallen infolge verspäteter Verfestigung im gerade exakt verdrallten Bereich des Vorwerkstückes zu vermeiden, hat es sich als besonders günstig erwiesen, wenn an die Plastifiziereinrichtung, vorzugsweise Induktionsspule , eine bezogen auf Relativbewegungsrichtung ihr, vorzugsweise mit konstantem Abstand, nachgeschaltete, vorzugsweise mit ihr mechanisch gekoppelte, Verfestigungseinrichtung, vorzugsweise ein auf das Vorwerkstück, insbesondere vollumfänglich von allen Seiten gerichtetes Gebläse, vorzugsweise unmittelbar, angeschlossen ist.

Für hochexakte Verläufe der Ausnehmungen kann zusätzlich eine derartige Kühleinrichtung der Plastifiziereinrichtung unmittelbar vorgeschaltet sein.

Um höchste Genauigkeit hinsichtlich Ganghöhe und Distanz der wendelartigen Ausnehmung bei gleichzeitig höchster Flexibilität der Fertigung zu erreichen, hat es sich als besonders günstig erwiesen, wenn die Torsionskraftaufbringungs- und Klemm-Einrichtung und die Einrichtung, beispielsweise Spindeltrieb, für die Relativbewegung von Werkstück und Plastifizierzone jeweils einen eigenen, vorzugsweise über eine Drehzahl-Vorschubgeschwindigkeitsverhältnis-einstellbare, vorzugsweise numerische, Steuereinrichtung miteinander verbundenen, Antriebsmotor aufweisen. Infolge der mechanischen Unabhängigkeit der beiden Antriebe zueinander, lassen sich schwierige Aufgaben bei Fertigung von Werkstücken mit komplizierter Formgebung der Wendel der Ausnehmung programmgesteuert lösen. Es sei betont, daß die Plastifizierzone keineswegs unbedingt eine Zone der Erwärmung sein muß. Z.B. kann ein Werkstück aus Kunststoff eingekapseltes Lösungsmittel enthalten, welches durch Energieeinwirkung freigesetzt den Körper zonal erweicht, wobei die Verdrallung erfolgt, wonach z.B. ein Härtungsprozeß einsetzt.

Anhand der Zeichnung und eines praktischen Beispieles wird die Erfindung näher erläutert.

Es zeigen Fig. 1 die schematische Ansicht einer Versuchsanlage in Seitenansicht und Fig. 2 in Draufsicht das Schema einer automatisierter Produktion zugänglichen Anlage für eine Fertigung von Werkstücken mit wendelartig verlaufenden Ausnehmungen, insbesondere für Bohrer mit Wendelkanälen und Fig. 3 ist die Wiedergabe einer Fotoaufnahme eines teilweise abgedrehten Probestabes eines erfindungsgemäß erhaltenen Wendelkanal-Bohrerstahls.

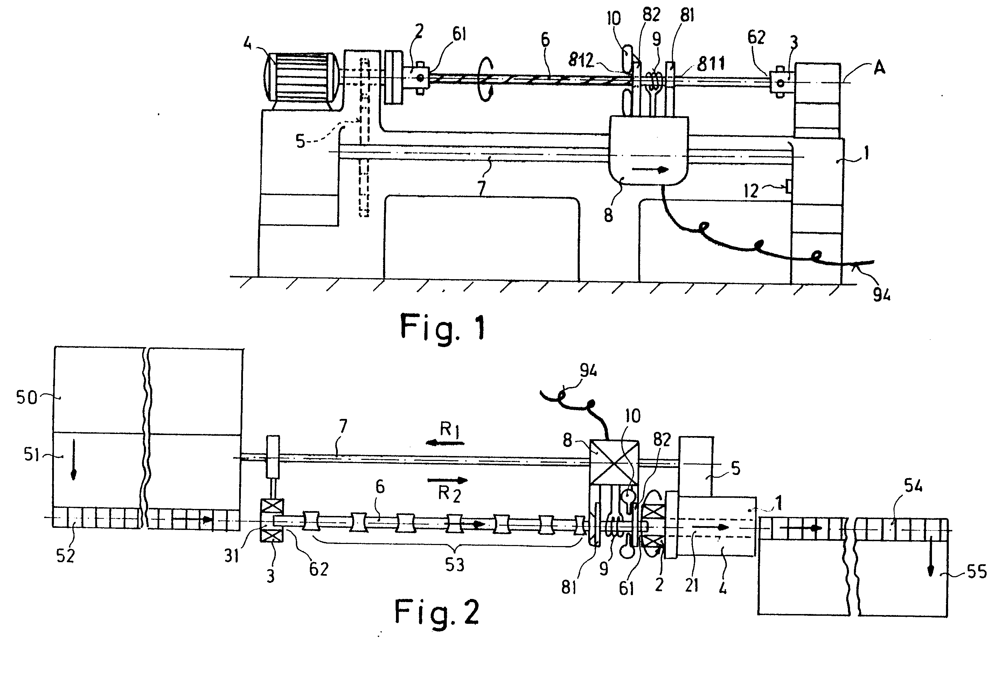

Die in Fig. 1 gezeigte Anlage 1, die zur Herstellung von Kühlkanalwendelbohrern geeignet ist, entspricht im wesentlichen einer Drehmaschine. Sie weist im einstellbaren Abstand zueinander ein drehfeststellbares Spannfutter 3 und ein mit einem Motor 4, gegebenenfalls über ein Getriebe antreibbares drehbares Spannfutter 2 auf, in welche die Endbereiche 61, 62 eines zu verdrallenden, mit linearen Ausnehmungen versehenen stabförmigen Vorwerkstückes 6 jeweils selbst verdrehungssicher eingeklemmt werden. Über ein mit Motor 4 für Verdrallfutter 2 verbundenes, nicht näher gezeigtes Getriebe 5 wird eine zur Achse A der beiden Spannfutter 2, 3 bzw. des Werkstückes 6 parallel angeordnete Schraubspindel 7 in drehende Bewegung versetzt, welche je nach Übersetzungsverhältnis des Getriebes 5 in konstantem Verhältnis zur Drehzahl des Futters 2, einen auf ihr geführten Schlitten 8 nach rechts dem Vorwerkstück entlangführt. Der Schlitten 8 weist eine mit einem elektrischen Wechselfeld über Zuleitung 94 beschickbare, vom Stab 6 durchsetzte Stromspule 9 als Erhitzungseinrichtung und ein an sie anschließendes,auf die Werkstück-Oberfläche gerichtetes,eine Verfestigungseinrichtung bildendes Gebläse 10 auf. Die Spule 9 ist von zwei ebenfalls mit dem Schlitten 8 verbundenen Werkstück-Führungsstützen 81, 82, welche das deren Öffnungen 811,812 durchsetzende Werkstück während des zonalen Plastifizierens und Verdrallens mechanisch gegen Verzug abstützen,flankiert. Mit einem Endschalter 12 kann der Vorschub des Schlittens 8 und die Verdrallung durch Abschalten des Motors 4 unterbrochen werden. Ist das stabförmige Vorwerkstück 6 zwischen den Klemmeinrichtungen 2 und 3 drehfest eingespannt wird in Induktionsspule 9 der Stromfluß eingeschaltet, wodurch im Stab im Bereich dieser Spule 9 durch Induktionserhitzung eine plastifizierte Zone gebildet wird. Ist die richtige Temperatur der Zone erreicht, wird,während Stab 6 am Ende 62 von nicht drehendem Futter 3 in Lage gehalten wird, mit dem Motor 4 das Futter 2 gedreht, das seinerseits das andere Ende 61 des Stabes 6 mit Torsion kraftbeaufschlagt, und ein Verdrallen des Stabes 6 mit seinerAusnehmung im Bereich der Plastifizierzone bewirkt. Gekoppelt mit Drehung des Futters 3 werden mit Spindel 7 und Schlitten 8,Kühleinrichtung 10 und Heizspule 9 entlang dem Werkstück 6 geführt, sodaß dieses von einer plastifizierten Zone durchwandert wird, während es dort jeweils gleichzeitig verdreht wird, wonach sofort eine Verfestigungszone nachwandert. Dabei wird die wendelförmige Ausnehmung gebildet. Danach können die weiteren Arbeitsgänge zur Bildung eines Bohrers wie Nutausbildung, Fräsen, Schleifen u. dgl. erfolgen.

Die in Fig. 2 schematisch gezeigte, automatisch betreibbare Verdralleinrichtung 1 für größere Produktion weist im wesentlichen die gleichen Hauptbauelemente auf, wie die Anlage der Fig. 1. Über eine Bundauflage 50 mit Vereinzelungsrost 51 und einem die einzelnen mit Linear-Bohrungen und/oder -Außennuten versehenen Vorwerkstücke 6 für Bohrer weiterfördernden Rollgang 52 wird jeweils ein Vorwerkstück 6 durch die Ausnehmung 31 einer Klemmeinrichtung 3 für die ortsfeste Einklemmung auf einem Einführrollgang 53, dessen Rollen beim Verdrallvorgang absenkbar sind, und in die Klemmung des Verdrallantriebes 2 gefördert. Nach Einklemmen des Endes 61 wird automatisch die Klemmeinrichtung 3, z.B. gesteuert mit Photozelle, über den Endbereich 62 des Werkstückes 6 verfahren und dieses wird ortsfest eingeklemmt. Um das Vorwerkstück 6 ist eine wasserkühlbare Induktionskupferspule 9 angeordnet, die mit einem mit Lineartrieb 7 verfahrbaren Schlitten 8 mit Transformator und Zuleitung 94 verbunden ist. Der Schlitten 8 ist mit dem Antrieb 4 der Verdrall-Klemmeinrichtung 2 über Getriebe 5 gekoppelt und wird während des Betriebes in der durch Pfeil R1 angedeuteten Richtung bewegt.

In Bewegungsrichtung vor und nach der Plastifizierspule 9 sind die Vorwerkstückführungen 81, 82 am Schlitten 8 angeordnet und vor Führung 82 ein Gebläse 10 zum Kühlen. Die Induktivspule 9 sowie die Stabführungsstützen 81, 82 sind am besten je nach Dicke des Werkstückes abgestuft, satzweise austauschbar. Der Verdrallvorgang erfolgt in analoger Weise wie für Fig. 1 beschrieben. Hat der Schlitten 8 bei seiner Bewegung in Richtung R1 die ortsfeste Einspanneinrichtung 3 erreicht, erfolgt automatisches Abschalten von Schlitten 8, Spule 9 und Antrieb 4, die vorher abgesenkten Rollen des Einführrollganges 52 werden angehoben und fördern nach automatischem Öffnen der Klemmeinrichtungen 2, 3 den verdrallten Stab durch die Hohlwelle 21 der Klemm- und Verdralleinrichtung 2 zum Ab- und Ausführrollgang 54, von wo er schließlich seitlich in eine Abwurfmulde 55 abgelegt wird. Währenddessen ist der Schlitten 8 automatisch wieder in Richtung R2 in die rechtsliegende Ausgangsposition verfahren worden und es beginnt mit dem Einbringen des nächsten Stabes in die Verdralleinrichtung ein gleicher Arbeitsgang. Die Stab-Durchmesser können z.B. bis zu 100 mm, deren Längen ohne weiteres z.B. bis zu 5 m betragen, die Vorschubgeschwindigkeit der Induktionsspule kann bis zu 50 mm/s, die Verdrall- drehzahl bis zu 100 $min^{-1}$, insbesondere bis zu 30 $min^{-1}$, betragen, wobei Vorschub sowie Verdrall-Drehzahl stufenlos regelbar sind.

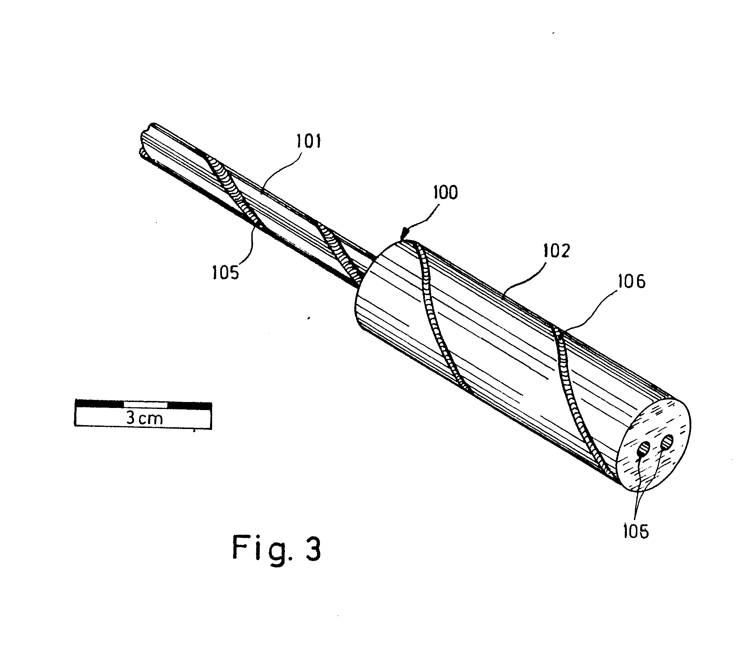

Am gemäß nachfolgendem Beispiel erhaltenen, erfindungsgemäßen Probestab 100 der Fig. 3, dessen Rückteil 101 konzentrisch abgedreht ist, sodaß dessen beide wendelförmig ausgebildeten Kühlkanäle 105 praktisch mittig geschnitten sichtbar sind und dessen Frontteil 102 eine Walznaht 106 aufweist, welche zur Sichtbarmachung der Verdrallung am Vorwerkstück vor der Verdrallung belassen worden ist, sind deutlich die hohe Gleichmäßigkeit und Synchronität des wendelartigen Verlaufes der Kühlkanäle sowie die hohe Gleichmäßigkeit der Verdrallung des Werkstückes über den Querschnitt bis zur Außenfläche zu erkennen.

Anhand eines Beispieles wird die erfindungsgemäße Herstellung von Kühlkanalbohrstahl auf einer Anlage, wie sie Fig. 1 prinzipiell zeigt, näher erläutert.

Es wurden Schnellstahl-Voll-Rundstabmaterial der Analyse 0,9 % C, 4,3 % Cr, 5,0 % Mo, 1,9 % V, 6,4 % W, Rest Eisen und herstellungsbedingte Verunreinigungen, 24 mm Durchmesser, mit 2 m und drei Schnellarbeitsstahl-Kanalbohrer-Vorwerkstücke, gleicher Analyse, 22 mm Durchmesser mit zwei parallel zur Achse angeordneten Kanälen mit jeweils 2,5 mm Durchmesser und ebenfalls mit 2 m Länge, eingesetzt. Bei einer Verdrallung mit einer Drehzahl von etwa 1,5 $min^{-1}$ und einer Vorschub- geschwindigkeit der Induktivheizspule von 2,25 $mm/s^{-1}$, danach schwacher Preßluftstrom zur Wiederverfestigung, also einem konstanten Vorschub von 90 mm pro Umdrehung, erfolgte in einer etwa 30 mm langen Zone der Stäbe querschnitts-gleichmäßige Erhitzung auf 840 - 850$^{o}$C, die Tem- peraturmessung erfolgte mit einem Strahlungspyrometer. Zur äußeren Sichtbarmachung der Verdrallung war der eingesetzte Vollstab angeschliffen, der Kühlkanalbohrstahl war zu diesem Zweck mit Naht gewalzt. Der Kühlkanalbohrstahl wurde mit ausgezogener Seele zum Ver-

0173675

- 14 -

Patentansprüche :

1. Verfahren zur Herstellung von, insbesondere metallischen, Werkstücken, vorzugsweise aus Stahl, mit ausgeprägter Längserstreckung, insbesondere für Bohrer od. dgl., mit mindestens einer, gegebenenfalls im wesentlichen um eine in Längserstreckungsrichtung verlaufende Achse wendelartig angeordneten Ausnehmung, insbesondere mit geschlossenem Querschnitt aufweisendem Kanal, durch Verdrallen eines mindestens eine, zu der genannten Achse vorzugsweise im wesentlichen parallel, verlaufende Ausnehmung aufweisenden, in plastischen Zustand gebrachten Vorwerkstückes, dadurch gekennzeichnet, daß unter Aufbringung und Aufrechterhaltung von um die Werkstückhaupt- und/oder eine Verdrallachse wirksamen Torsionskräften durch ein mindestens eine Ausnehmung in seinem Inneren aufweisendes Vorwerkstück entlang von zumindest Teilen seiner Längserstreckung zumindest eine, geringere Länge als die Länge des Vorwerkstückes aufweisende, im wesentlichen den gesamten Querschnitt des Vorwerkstückes erfassende Plastifizierzone, vorzugsweise Erhitzungszone, geführt wird.

2. Verfahren nach Anspruch 1, dadurch gekennzeichnet, daß unmittelbar anschließend an die Plastifizierzone durch das Werkstück eine Verfestigungszone geführt wird.

3. Verfahren nach Anspruch 1 oder 2, dadurch gekennzeichnet, daß die Plastifizierzone mit einem elektrischen Induktionsfeld gebildet wird.

4. Verfahren nach einem der Ansprüche 1 bis 3, dadurch gekennzeichnet, daß die Verfestigungszone mit, vorzugsweise von allen Seiten, auf das Vorwerkstück gerichtetem drallen gegeben. Es wurden folgende Ergebnisse erzielt: Bereits der Schnellstahlvollstab konnte mit gleichmäßiger Steigung, Abweichung $< 2$ % und ohne Wellenbildung verdrallt werden. Die Kühlkanalbohrstäbe wurden mit gleichem Erfolg verdrallt. Die Temperatur betrug 850 - 860°C. Der beim Kühlkanalbohrstahl erhaltene Steigungswinkel der Wendel betrug beim angegebenen Vorschub etwa 37°. Die Gleichmäßigkeit des Dralles, Ganghöhen-Abweichung $< 2$ % wurde an den kalten Probestäben durch Ausmessung der verwundenen Naht und Ausmessen der Kühlkanäle durch scheibenweises Zerschneiden bzw. Abdrehen der Stäbe überprüft; es konnte bisher nicht erreichte Exaktheit der Lage der Kühlkanalwendel der Bohrer festgestellt werden.

Gasstrom, insbesondere Luftstrom, gegebenenfalls gemeinsam mit Flüssigkeit, gebildet wird.

5. Verfahren nach einem der Ansprüche 1 bis 4, dadurch gekennzeichnet, daß das Vorwerkstück im wesentlichen im Bereich eines seiner Enden mit Torsionskräften beaufschlagt wird, während es im Bereich des anderen Endes gegen Verdrehung gesichert festgehalten wird.

6. Verfahren nach einem der Ansprüche 1 bis 5, dadurch gekennzeichnet, daß das Vorwerkstück im wesentlichen in den Bereichen beider Enden mit einander gegenläufigen Torsionskräften beaufschlagt wird.

7. Verfahren nach einem der Ansprüche 1 bis 6, dadurch gekennzeichnet, daß die Plastifizierzone durch ein ortsfest gehaltenes Vorwerkstück bewegt wird.

8. Verfahren nach einem der Ansprüche 1 bis 7, dadurch gekennzeichnet, daß auf das Vorwerkstück aufgebrachte Torsionsgeschwindigkeit und Bewegungsgeschwindigkeit der Plastifizierzone in funktioneller, vorzugsweise konstanter, Abhängigkeit zueinander eingestellt werden.

9. Verfahren nach einem der Ansprüche 1 bis 8, dadurch gekennzeichnet, daß eine Plastifizierzone durch das Vorwerkstück geführt wird, deren Länge in Hauptachsrichtung höchstens gleich, vorzugsweise geringer ist, als dessen Dicke bzw. Durchmesser.

10. Vorrichtung zur Durchführung des Verfahrens nach einem der Ansprüche 1 bis 9, gekennzeichnet durch mindestens zwei auf konstanten Abstand voneinander einstellbar angeordnete Einrichtungen (2, 3) zum verdrehungssicheren Festhalten eines ausgeprägte Längserstreckung aufweisenden Vorwerkstückes (6), deren zumindest eine als Torsionskraftaufbringungseinrichtung (2) um eine Verdrallachse, vorzugsweise Vorwerkstückhauptachse (A), drehbar antreibbar ist, und mindestens eine im wesentlichen zwischen den Festhalteeinrichtungen (2, 3) angeordnete, vorzugsweise Induktivheizeinrichtung (9) aufweisende, Plastifiziereinrichtung, wobei die Festhalteeinrichtungen (2, 3) mit dem Vorwerkstück (6) einerseits und die Plastifiziereinrichtung (9) andererseits im wesentlichen in Längserstreckungsrichtung des Vorwerkstückes (6) zueinander relativ-bewegbar sind.

11. Vorrichtung nach Anspruch 10, dadurch gekennzeichnet, daß die Plastifiziereinrichtung (8, 9) Lagehalte- bzw. Führungs-Einrichtungen (81, 82) für das Vorwerkstück (6) aufweist.

12. Vorrichtung nach Anspruch 10 oder 11, dadurch gekennzeichnet, daß der Antrieb (4) für die Torsionskraftaufbringungseinrichtung (2) und jener für die Relativ-Bewegbarkeit der Festhalte- bzw. Verdralleinrichtung (3, 2) und Plastifiziereinrichtung (8, 9) zueinander, drehzahl- bzw. vorschubgeschwindigkeits-einstellbar, insbesondere numerisch gesteuert, miteinander gekoppelt sind.

13. Vorrichtung nach einem der Ansprüche 10 bis 12, dadurch gekennzeichnet, daß an die Plastifiziereinrichtung, vorzugsweise Induktionsspule (9) eine in Relativ-Bewegungsrichtung (R1) ihr, vorzugsweise mit konstantem Abstand, nachgeschaltete, vorzugsweise mit ihr mechanisch gekoppelte, Verfestigungseinrichtung, vorzugsweise ein auf das Vorwerkstück, insbesondere vollumfänglich von allen Seiten, gerichtetes Gebläse (10), vorzugsweise unmittelbar, angeschlossen ist.

14. Vorrichtung nach einem der Ansprüche 10 bis 13, dadurch gekennzeichnet, daß die Torsionskraftaufbringungs- und Klemm-Einrichtung (2) und die Einrichtung, beispielsweise Spindeltrieb (7), für die Relativ-Bewegung von Werkstück (6) und Plastifizierzone jeweils einen eigenen, vorzugsweise über eine Drehzahl-Vorschubgeschwindigkeitsverhältnis-einstellbare, vorzugsweise numerische, Steuereinrichtung, miteinander verbundenen, Antriebsmotor aufweisen.

Fig. 1

Fig. 2

0173675

Fig. 3

3 cm

Europäisches
Patentamt

**EUROPÄISCHER RECHERCHENBERICHT**

| EINSCHLÄGIGE DOKUMENTE | | | EP 85890181.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| X | <u>DE - A1 - 2 818 626</u> (CENTRE TECHNIQUE DES INDUSTRIES MECANI-QUES)<br><br> * Seite 11, letzter Absatz - Seite 16, Absatz 4; Fig. 3,4 *<br><br>-- | 1-8,10, 12-14 | B 23 P 15/32<br>B 21 K 5/04 |
| X | <u>US - A - 3 117 471</u> (O'CONNELL)<br><br> * Spalte 1, Zeile 46 - Spalte 2, Zeile 25; Spalte 3, Zeile 65 - Spalte 4, Zeile 6; Patentansprüche 1,2,5,6,8; Fig. 1-6 * | 1-3,5, 7-10,12 | |
| A | <br>-- | 13 | |
| A | <u>US - A - 1 428 387</u> (MEYERS)<br><br> * Seite 1, Zeilen 15-32; Patentanspruch 1; Fig. *<br><br>---- | | |

| RECHERCHIERTE SACHGEBIETE (Int. Cl 4) |
|---|
| B 21 D 11/00 |
| B 21 K 5/00 |
| B 23 P 15/00 |
| B 23 P 17/00 |

Der vorliegende Recherchenbericht wurde für alle Patentansprüche erstellt.

| Recherchenort | Abschlußdatum der Recherche | Prüfer |
|---|---|---|
| WIEN | 26-11-1985 | TROJAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82